# EUROPÄISCHE PATENTSCHRIFT

(11) **EP 0 622 182 B1**
(45) Veröffentlichungstag und Bekanntmachung des Hinweises auf die Patenterteilung: **20.10.1999**
(21) Anmeldenummer: 94105987.5
(22) Anmeldetag: 18.04.1994
(51) Int. Cl.: B32B 27/08

(54) **Tiefziehbare, siegelbare, mehrschichtige Recyclingfolie auf Basis von Polyamid und Polyolefinen mit hohem Recyclatanteil**
Deep-drawable, sealable multilayered foil comprising polyamide and polyolefin, containing a high proportion of recycled material
Feuille multicouche emboutissable et scellable, à base de polyamide et polyoléfine, à haute teneur en matériaux recyclés

(30) Priorität: 30.04.1993 DE 4314214
(43) Veröffentlichungstag der Anmeldung: 02.11.1994
(73) Patentinhaber: WOLFF WALSRODE AKTIENGESELLSCHAFT, D-29699 Walsrode (DE)
(72) Erfinder: Gasse, Andreas S., Dr., D-29664 Walsrode (DE); Klein, Rudi, D-29664 Walsrode (DE); Reiners, Ulrich, Dr., D-29643 Neuenkirchen (DE)
(74) Vertreter: Pettrich, Klaus-Günter, Dr.

(56) Entgegenhaltungen:
- EP-A- 0 568 988
- EP-A- 0 583 595
- US-A- 4 668 571
- DATABASE WPI Week 9202, 14. März 1990 Derwent Publications Ltd., London, GB; AN 92-012814 & JP-A-3 262 642 (SHOWA DENKO KK) 22. November 1991
- DATABASE WPI Week 9149, 15. Februar 1990 Derwent Publications Ltd., London, GB; AN 91-356627 & JP-A-3 237 143 (SUMITOMO BAKELITE KK) 23. Oktober 1991

## Beschreibung

Die vorliegende Erfindung betrifft eine recyclierte Folie auf Basis von Polyamid-und Polyolefinabfällen, wie sie beispielsweise bei der Produktion von Verbundfolien anfallen. Die Erfindung ist im Rahmen der stofflichen Verwertung von Produktionsabfällen zu sehen und damit von hohem ökologischen und ökonomischen Stellenwert. Als tiefziehbare Folie ist sie auf modernen Tiefziehautomaten für die Verpackung von medizinisch-technischen Geräten, Halbzeugen und Fertigteilen sowie Lebensmitteln einsetzbar. Die erfindungsgemäß hergestellte Folie selbst kann vollständig recycled werden.

Nach dem Stand der Technik sind verschiedene Folienaufbauten bekannt, die Scrapmaterial auf Basis von Polyamid und Polyolefnen enthalten. Der Terminus Scrapmaterial meint hier Folienabfälle, wie sie z.B. bei der Herstellung von Verbundfolien anfallen. Das können Randbeschnitte, Anfahrrollen, Schneideabfälle etc. sein, die dann agglomeriert und gegebenenfalls regranuliert werden. Der überwiegende Teil der Folien, die mit Scrapmaterial gefertigt wurden, sind einschichtige Folien (z.B. JP 04119809, JP 03-237143), die hier nicht näher betrachtet werden sollen.

EP-A- 0,622,183 betrifft mehrschichtige, siegelbare Recyclingfolie bestehend aus mindestens einer Scrapschicht, einer Siegelschicht und einer Begleitschicht,

Im Bereich der Mehrschichtfolien ist die Einarbeitung von Scrapmaterial daraus entstanden, Randabschhitte, wie sie beim Produktionsprozeß zwingend anfallen, möglichst dem Prozeß wieder zuzuführen. Man spricht hier von Randbeschnittrückführung. Die Idee dabei ist das Scrapmaterial so einzuarbeiten, daß die Eigenschaften der Folie (mechanische, optische Eigenschaften, Durchlässigkeit etc.) möglichst unbeeinträchtigt bleiben. Dies hat zur Folge, daß nur geringe Mengen an Scrapmaterial auf diese Weise eingebracht werden können. Das Scrapmaterial wird entweder in kleinen Mengen einer in aller Regel innen liegenden Schicht der Folie zugegeben oder als einzelne Schicht zwischen vorhandene Schichten gelegt. Scrapschichten aus Polyamid und Polyolefinen sind morphologisch inhomogen und nach dem Stand der Technik allein nicht tiefziehbar. Aufgrund der Inkompatibilität der sich bildenden Phasen bilden sich schon im spannungslosen Zustand Mikrorisse. Bei Zugbelastungen muß hier ein frühzeitiger Bruch eintreten (Braun, D.: Chemische Prozesse bei der Herstellung und Verarbeitung von Polymerblends; in Aufbereiten von Polymerblends, VDI Verlag, Düsseldorf (1989), S. 129 ff).

In AU 8826-473-A wird ein Laminat beschrieben, welches in einer Zwischenschicht Scrapmaterial, das von derselben Folie stammt (z.B. Randbeschnitt) aufnehmen kann. Die Thermoformbarkeit des gesamten Verbundes kann hier offensichtlich nur dadurch erreicht werden, daß die inhomogene, zum Aufreißen neigende Scrapschicht beidseitig gestützt wird. Apparative Möglichkeiten der Einkapselung von Scrapschichten werden in GB 2075-914 beschrieben.

In US 4 668 571 wird ein dreischichtiger Aufbau beschrieben, welcher in der innenliegenden Schicht Scrapmaterial der eigenen Folie aufnehmen kann. Zur Erzielung der gewünschten Eigenschaften muß in diesem Fall der Scrapschicht reines Material der angrenzenden Schichten beigemengt werden.

US 4 647 509 beschreibt eine polystyrolhaltige Mehrlagenstruktur, welche in einer ersten und zweiten Schicht so konzipiert ist, daß Scrapmaterial, bestehend aus beiden Schichten als Recyclat in die zweite Schicht zurückgeführt werden kann.

Alle diese Folien haben den Nachteil, daß hier nur Scrapmaterial, welches aus derselben Folie stammt, wieder in die Folie zurückgeführt wird und kein Fremdmaterial an Scrap aufgenommen werden kann. Ferner ist es bisher nicht gelungen einen Folienverbund mit Scrapschicht, die nur eine anliegende Stützschicht und einen Recyclatanteil von über 50 Gew.-% bezogen auf die gesamte Folie aufweist, zu fertigen, der tiefziehbar ist.

Es stellt sich daher die Aufgabe, eine Mehrschichtfolie bereitzustellen, die tiefziehbar und siegelfähig ist und große Mengen an Recyclat auf Basis von Polyamid und Polyolefinen enthält.

Das Recyclat kann dazu alle Polyamid/Polyolefin-Folienabfälle, wie sie z.B. bei der Produktion von Polyamid/Polyolefin-Folien entstehen, unsortiert enthalten. Die zu erfindende Folienstruktur muß also neben ihrer Eigenschaft selbst vollständig recyclierbar zu sein, in einer Scrapschicht Folienabfälle anderer Polyamid-Polyolefin-Folienstrukturen aufnehmen können.

Die Folie muß tiefziehbar und siegelfähig und damit auf modernen Tiefziehautomaten, sowohl als Deckel- als auch als Muldenfolie für Verpackungsanwendungen einsetzbar sein. Die Folie muß daher auch gute Gleiteigenschaften besitzen.

Die Folie muß sowohl im tiefgezogenen als auch im unverformten Zustand ein optisch homogenes Bild abgeben.

Übertaschenderweise gelang dies durch eine siegelfähige, mehrschichtige Recyclingfolie bestehend aus einer Scrapschicht und einer Siegelschicht, die dadurch gekennzeichnet ist, daß
- die Folie tiefziehbar ist,
- die Scrapschicht aus Polyamid/Polyolefin-Recyclat und einem [Haftvermittler] besteht, wobei der Recyclatanteil der Scrapschicht 60 bis 98 Gew.-% und der Haftvermittleranteil 2 bis 40 Gew.-% beträgt,
- das Recyclat einen Polyamidanteil von 3 bis 45 Gew.-% aufweist,
- die Siegelschicht ein- oder mehrschichtig aufgebaut ist und aus polyolefinischem Polymer oder Copolymer besteht, wobei die Schichten gegebenenfalls gleich oder unterschiedlich sind.

Das Polyamid/Polyolefin-Recyclat kann ein Regenerat (nach Umschmelzprozeß mit Zusätzen granuliert), ein Regranulat (nach Umschmelzprozeß ohne Zusätze granuliert) oder ein Agglomerat (ohne Zusätze) sein, die aus Folienabfällen hergestellt wurden. Der Polyamidanteil im Recyclat beträgt 3 bis 45 Gew.-%. Das Polyamid ist entweder aliphatisches Polyamid wie PA 6, PA 11, PA 12, PA 66, PA 6.66, PA 6.8, PA 6.9, PA 6.10, PA 6.11, PA 6.12, oder ein Copolymer aus den darin enthaltenen Monomereinheiten oder eine Mischung der genannten aliphatischen Polyamide. Der polyolefinische Anteil setzt sich aus Polymeren wie hochdichtem, mitteldichtem, niederdichtem und linearem niederdichten Polyethylen, Polypropylen und Polypropylen-Copolymeren, Ethylen/Vinylacetat-Copolymeren, Ethylen/Vinylalkohol-Copolymeren, Ethylen/Acrylacetat-Copolymeren, Ethylen/Methylacrylacetat-Copolymeren, Ionomeren sowie Klebstoffresten aus kaschierten Folienverbunden zusammen.

Der Haftvermittler ist ein anhydridmodifiziertes Polyolefin oder ein anhydridmodifiziertes Ethylen/Vinylacetat-Copolymeres. Vorzugsweise ist das ein auf Ethylen-, Propylen- oder Ethylen/Vinylacetat-Basis mit Maleinsäureanhydrid gepfropfter Haftvermittler.

Als Siegelschichtmaterial wird ein üblicher Siegelrohstoff eingesetzt. Dies kann ein Polyethylen, Polypropylen, Polypropylen-Copolymer, ein Ethylen/Vinylacetat-Copolymer, ein Ethylen/Acrylsäure-Copolymer, ein Ethylen-Methylenacrylsäure-Copolymer oder Ionomer oder aber ein Blend aus den genannten Polymeren sein.

Gegebenenfalls kann die Erfindung eine Zwischenschicht enthalten, die aus Polyamid oder Polyolefin besteht oder den Aufbau Polyamid/EVOH/Polyamid aufweist oder aus einem mit Haftvermittler angereicherten Gemisch aus Polyamid und Polyolefin besteht. Gegebenenfalls besteht weiter die Möglichkeit einer Deckschicht auf der Siegelschicht abgewandten Seite. Hier kommen gleiche Materialien wie für die Zwischenschicht in Frage. In beiden Fällen besteht wiederum die Möglichkeit die Folie über Klebkaschierung und/oder Coextrusion zu fertigen.

Da beide Schichten für die Tiefziehbarkeit der Folie nicht erforderlich sind, bieten Zwischen- und Deckschicht die Möglichkeit das Eigenschaftsprofil der Folie (z. B. Optik, Barriereeigenschaften etc.) zu variieren. Es kann insbesondere Polyamid (zur Erzielung brillianter Optik, hervorragender mechanischer Festigkeit), Polyolefin (zur Erzielung hervorragender Wasserdampfbarriere), ein mit Haftvermittler angereichertes Gemisch aus Polyamid und Polyolefin (variabel einstellbares Eigenschaftsprofil) oder eine Struktur mti dem Aufbau Polyamid/EVOH/Polyamid (hervorragende Sauerstoffbarriere) eingesetzt werden.

Überraschenderweise ist es durch den erfindungsgemäßen Aufbau der Folie gelungen die besonderen Anforderungen an Tiefziehbarkeit und Siegelbarkeit zu erfüllen. Es war nicht zu erwarten, daß ein Gemisch aus miteinander unverträglichen Polymeren unter Zugabe geringer Haftvermittlermengen in einer Schicht verarbeitet, mit nur einer angrenzenden Stützschicht, sich in einem Mehrschichtverbund tiefziehen ließ. Weiterhin ist erstaunlich, daß die Scrapschicht Recyclat auf Basis von Polyamid und Polyolefinen enthalten kann, das nicht aus derselben Folie stammen muß. Überraschenderweise ergibt die Folie im ursprünglichen wie auch im tiefgezogenen Zustand ein vergleichbar optisch homogenes Bild.

Die Herstellung der beanspruchten Folie erfolgt zweckmäßigerweise durch Coextrusion. Besteht nicht die Möglichkeit der Coextrusion, so sind die einzelnen Schichten als Einschichtfolien zu fertigen und anschließend über Klebkaschierung zu verbinden. Auch eine Kombination der Vorgehensweisen ist denkbar. Es kommen bekannte nach dem Stand der Technik übliche Anlagenkonzepte zur Anwendung.

Zur Beurteilung der Erfindung wurde als wesentliches Merkmal die Tiefziehbarkeit herangezogen. Zur Ermittlung der Tiefziehbarkeit wurden die zuvor gefertigten Folienmuster auf modernen Tiefziehautomaten, wie sie in der Verpackungsindustrie Anwendung finden (z.B. Tiromat, Multivac), getestet. Dazu wurden in der Maschine eingespannte Folienbahnen abschnittweise über eine Heizplatte erwärmt. Die Wärme kann dazu entweder von der Siegelseite oder auch der der Siegelseite abgewandten Seite der Folie erfolgen. Die mit Heizplattentemperaturen von 100 bis 110°C vorgewärmten Folien wurden anschließend durch Anlegen eines Vakuums in eine Mulde mit dem Rahmenmaß 185 x 115 mm gezogen. Die Tiefe der Mulde wurde zwischen 20 und 70 mm variiert.

Das Tiefziehergebnis wurde dazu wie folgt beurteilt:
1. Das Tiefziehergebnis ist ungenügend, jeder Versuch eine Mulde zu formen führt zu Aufrissen in der Folie:
   Merkmal "--"
2. Das Tiefziehergebnis ist mangelhaft, eine nicht akzeptable Anzahl von Versuchen eine Mulde zu formen, führt zu Aufrissen in der Folie:
   Merkmal "-"
3. Das Tiefziehergebnis ist gut, es treten keine Aufrisse auf und die Ausformung der Mulde ist gut:
   Merkmal "+"

Parallel zur Beurteilung der Tiefziehbarkeit mittels Tiefziehversuch wurde die Reißdehnung nach DIN 53 455 ermittelt. Unter Reißdehnung wird die Längenänderung der Probe in mm bei Reißkraft bezogen auf die ursprüngliche Meßlänge, in mm verstanden (siehe Definition in DIN 53 455). Dazu wurden Zugversuche nach der genannten DIN durchgeführt. Es wurden 15 mm breite Proben bei 23°C und 50 % relativer Luftfeuchte untersucht. Die Prüfgeschwindigkeit betrug 100 mm/min.

Der Gegenstand der Erfindung soll anhand der folgenden Beispiele erläutert werden.

### Beispiele und Vergleichsbeispiele

### A. Beispiel 1:

Zweischichtige Folie mit dem Aufbau
**Scrap** / **EVA**
120 / 50 µm

Die Folie ist durch Coextrusion hergestellt worden. Die Scrapschicht wies einen Haftvermittleranteil von 20 Gew.-% und einen Recyclatanteil von 80 Gew.-% auf. Der Haftvermittler war ein maleinsäureanhydridgepfropftes Polymer auf LLDPE-Basis. Der Polyamidanteil im Recyclat betrug 33 Gew.-%. EVA ist ein Ethylen/Vinylacetat-Copolymeres mit einem Vinylacetatgehalt von 5 Gew.-%.

### B. Beispiel 2:

Zweischichtige Folie mit dem Aufbau
**Scrap** / **PE**
70 / 70 µm

Die Folie ist durch Klebkaschierung hergestellt worden, wobei die Scrapschicht und die PE-Schicht zuvor als einschichtige Folie extrudiert wurden. Die Scrapschicht wies einen Haftvermittleranteil von 15 Gew.-% und einen Recyclatanteil von 85 Gew.-% auf. Der Haftvermittler war ein maleinsäureanhydridgepfropftes Polymer auf LLDPE-Basis. Der Polyamidanteil im Recyclat betrug 33 Gew.-%. PE ist ein handelsübliches niederdichtes Polyethylen.

### C. Vergleichsbeispiel 1:

Einschichtige Folie mit dem Aufbau
**Scrap**
70 µm

Die Folie ist als einschichtige Folie extrudiert worden. Die Scrapschicht wies einen Haftvermittleranteil von 15 Gew.-% und einen Recyclatanteil von 85 Gew.-% auf. Der Haftvermittler war ein maleinsäureanhydridgepfropftes Polymer auf LLDPE-Basis. Der Polyamidanteil im Recyclat betrug 33 Gew.-%.

### D. Vergleichsbeispiel 2:

Einschichtige Folie mit dem Aufbau
**Scrap**
70 µm

Die Folie ist als einschichtige Folie extrudiert worden. Die Scrapschicht wies einen Haftvermittleranteil von < 1 Gew.-% und einen Recyclatanteil von < 99 Gew.-% auf. Der Polyamidanteil im Recyclat betrug 33 Gew.-%.

Für die beschriebenen Folien A, B, C, und D wurden die Reißdehnung nach DIN 53 455 ermittelt und das Tiefziehverhalten beurteilt, wie zuvor beschrieben. Das Ergebnis zeigt Tabelle 1.

**Tabelle 1**

| Vergleich der Folienaufbauten A, B, C, und D | | | |
|---|---|---|---|
| | Reißdehnung [%] | Tiefziehergebnis | Haftvermittler-Anteil im Scrap |
| A. Beispiel 1 | 485 +/- 19 | + | 20 % |
| B. Beispiel 2 | 436 +/- 12 | + | 15 % |
| C. Vergleich 1 | 336 +/- 37 | - | 15 % |
| D. Vergleich 2 | 36 +/- 24 | -- | < 1 % |

Es wird deutlich, daß die Einschichtfolie D, die praktisch ohne Haftvermittler gefertigt wude, nicht tiefziehbar ist. Folie C zeigt, daß der Zusatz von Haftvermittler allein ebenfalls keine ausreichende Tiefziehbarkeit bewirkt. Die Folien A und B, die erfindungsgemäß hergestellt wurden, ergaben erstaunlicherweise tiefziehbare Folien. Die gemessene Reißdehnung unterstreicht noch einmal das ermittelte Tiefziehergebnis. Die tiefziehbaren Folien A und B weisen deutlich höhere Reißdehnungen auf, als die nicht tiefziehbaren Folien C und D.

## Patentansprüche

1. Mehrschichtige, siegelbare Recyclingfolie aus einer Scrapschicht und einer Siegelschicht, dadurch gekennzeichnet, daß
- die Folie tiefziehbar ist
- die Scrapschicht aus Polyamid/Polyolefin-Recyclat und einem Haftvermittler besteht, wobei der Recyclatanteil der Scrapschicht 60 bis 98 Gew.-% und der Haftvermittleranteil 2 bis 20Gew.-% beträgt,
- das Recyclat einen Polyamidanteil von 3 bis 45 Gew.-% aufweist,
- die Siegelschicht ein- oder mehrschichtig aufgebaut ist und aus polyolefinischem Polymer oder Copolymer besteht, wobei die Schichten gegebenenfalls gleich oder unterschiedlich sind.

2. Folie nach Anspruch 1, dadurch gekennzeichnet, daß die Folie durch Klebkaschierung, Extrusion, Coextrusion, Extrusionskaschierung und/oder Extrusionsbeschichtung hergestellt ist, wobei die Folie gegebenenfalls zusätzliche Zwischenschichten aus Haftvermittler enthält.

3. Folie nach Anspruch 1 und 2, dadurch gekennzeichnet, daß das polyolefinische Polymer oder Copolymer der Siegelschicht ein Polyethylen, Polypropylen, Polypropylen-Copolymer, Ethylen/Vinylacetat-Copolymer, Ethylen/Acrylsäure-Copolymer, Ethylen/Methylen-Acrylsäure-Copolymer oder Ionomer oder aber einem Blend aus den genannten Polymeren ist.

4. Folie nach Ansprüchen 1 bis 3, dadurch gekennzeichnet, daß das Recyclat ein Regenerat, ein Regranulat oder ein Agglomerat auf Basis von Polyamid/Polyolefin-Folienabfällen oder ein Gemisch aus zwei bzw. drei der genannten Recyclatmodifikationen ist.

5. Folie nach Ansprüchen 1 bis 4, dadurch gekennzeichnet, daß das Polyamid aus den aliphatischen Polyamiden PA 6, PA 11, PA 12, PA 66, PA 6.66, PA 6.8, PA 6.9, PA 6.10, PA 6.11, PA 6.12, einem Copolymer aus den darin enthaltenen Monomereinheiten oder aus einer Mischung der genannten aliphatischen Polyamide besteht.

6. Folie nach Ansprüchen 1 bis 5, dadurch gekennzeichnet, daß der Haftvermittler ein anhydridmodifiziertes Polyolefin oder ein anhydridmodifiziertes Ethylen/Vinylacetat-Copolymeres ist.

7. Folie nach Ansprüchen 1 bis 6, dadurch gekennzeichnet, daß die Scrapschicht 30 bis 90 %, vorzugsweise 50 bis 70 %, die Siegelschicht 10 bis 70 %, vorzugsweise 30 bis 50 %, der Foliendicke aus Scrapschicht und Siegelschicht aufweist.

8. Folie nach Ansprüchen 1 bis 7, dadurch gekennzeichnet, daß die Folie eine Gesamtdicke von 0,050 bis 0,500 mm, vorzugsweise bis 0,080 bis 0,400 mm aufweist.

9. Folie nach Ansprüchen 1 bis 8, dadurch gekennzeichnet, daß mindestens eine Schicht eingefärbt und/oder bedruckt ist.

10. Verwendung der Folie gemäß einem der Ansprüche 1 bis 9, dadurch gekennzeichnet, daß die Folie zur Verpackung von medizinisch-technischen Geräten, Halbzeugen und Fertigteilen oder zur Verpackung von Lebensmitteln eingesetzt wird.

## Claims

1. A multi-layer sealable recycled film comprising one layer of scrap and one sealing layer, characterised in that
- the film is deep-drawable,
- the scrap layer comprises recycled polyamide/polyolefin and a primer, the proportion of recycled material in the scrap layer being 60 to 98 wt.% and the proportion of primer being 2 to 20 wt.%,
- the recycled material has a polyamide content of 3 to 45 wt.% and
- the sealing layer is in one or more layers and made of polyolefinic polymer or copolymer, the layers optionally being the same or different.

2. A film according to claim 1, characterised in that the film is made by adhesive lamination, extrusion, co-extrusion, and extrusion coating and/or extrusion lining, the film optionally contains intermediate layers of primer.

3. A film according to claims 1 and 2, characterised in that the polyolefinic polymer or copolymer in the sealing layer is a polyethylene, polypropylene, polypropylene copolymer, ethylene/vinyl acetate copolymer, ethylene/acrylic acid copolymer, ethylene/methylene acrylic acid copolymer or ionomer or a blend of the aforementioned polymers.

4. A film according to claims 1 to 3, characterised in that the recycled material is regenerated, regranulated or agglomerated on the basis of polyamide/polyolefin film waste or is a mixture of two or three of the aforementioned recycled materials.

5. A film according to claims 1 to 4, characterised in that the polyamide consists of aliphatic polyamides such as PA 6, PA 11, PA 12, PA 66, PA 6.66, PA 6.8, PA 6.9, PA 6.10, PA 6.11 or PA 6.12, or a copolymer of the monomer units therein or a mixture of the aforementioned aliphatic polyamides.

6. A film according to claims 1 to 5, characterised in that the primer is an anhydride-modified polyolefin or an anhydride-modified ethylene/vinyl acetate copolymer.

7. A film according to claims 1 to 6, characterised in that the scrap layer makes up 30 to 90%, preferably 50 to 70% and the sealing layer makes up 10 to 70%, preferably 30 to 50%, of the thickness of the film comprising the scrap layer and the sealing layer.

8. A film according to claims 1 to 7, characterised in that the film has a total thickness of 0.050 to 0.500 mm, preferably 0.080 to 0.400 mm.

9. A film according to claims 1 to 8, characterised in that at least one layer is coloured and/or printed.

10. Use of the film according to any of claims 1 to 9, characterised in that the film is used as packaging for industrial medical equipment, semi-finished products and finished products or for packaging of food.

## Revendications

1. Feuille recyclée à couches multiples, soudable, consistant en une couche de déchets et une couche de soudure et caractérisée en ce que
- elle est emboutissable,
- la couche de déchets consiste en matière recyclée de polyamide/polyoléfine et en un agent d'adhérence, la teneur de la couche de déchets en matière recyclée étant de 60 à 98 % en poids et sa teneur en agent d'adhérence de 2 à 20 % en poids,
- la matière recyclée contient de 3 à 45 % en poids de polyamide,
- la couche de soudure, consistant elle-même en une ou plusieurs feuilles, consiste en polymère ou copolymère polyoléfinique, les diverses feuilles étant le cas échéant identiques ou différentes.

2. Feuille selon la revendication 1, caractérisée en ce qu'elle est fabriquée par doublage-collage, par extrusion, par coextrusion, par doublage par extrusion et/ou par revêtement par extrusion, et en ce qu'elle contient le cas échéant d'autres couches intermédiaires consistant en l'agent d'adhérence.

3. Feuille selon les revendications 1 et 2, caractérisée en ce que le polymère ou copolymère polyoléfinique de la couche de soudure est un polyéthylène, un polypropylène, un copolymère du propylène, un copolymère éthylène/acétate de vinyle, un copolymère éthylène/acide acrylique, un copolymère éthylène/acide méthylène-acrylique ou un ionomère ou encore un mélange de ces polymères.

4. Feuille selon les revendications 1 à 3, caractérisée en ce que la matière recyclée est une matière régénérée une matière mise à nouveau à l'état de granulés ou une matière agglomérée à base de déchets de feuilles de polyamide/polyoléfine ou un mélange de deux ou trois des diverses matières recyclées en question.

5. Feuille selon les revendications 1 à 4, caractérisée en ce que le polyamide consiste en les polyamides aliphatiques PA 6, PA 11, PA 12, PA 66, PA 6.66, PA 6.8, PA 6.9, PA 6.10, PA 6.11, PA 6.12, en un copolymère des mêmes motifs monomères ou en un mélange des polyamides aliphatiques en question.

6. Feuille selon les revendications 1 à 5, caractérisée en ce que l'agent d'adhérence est une polyoléfine à modification anhydride ou un copolymère éthylène/acétate de vinyle à modification anhydride.

7. Feuille selon les revendications 1 à 6, caractérisée en ce que la couche de déchets représente de 30 à 90 %, de préférence de 50 à 70% et la couche de soudure de 10 à 70 %, de préférence de 30 à 50 % de l'épaisseur de la feuille consistant en la couche de déchets et la couche de soudure.

8. Feuille selon les revendications 1 à 7, caractérisée en ce qu'elle a une épaisseur totale de 0,050 à 0,500 niin, de préférence de 0,080 à 0,400 mm.

9. Feuille selon les revendications 1 à 8, caractérisée en ce qu'elle comprend au moins une couche qui est colorée et/ou imprimée.

10. Utilisation de la feuille selon une des revendications 1 à 9, caractérisée en ce qu'on l'utilise pour l'emballage de dispositifs techniques médicinaux, de produits semi-finis, de pièces finies ou de produits alimentaires.
